# NOUVEAU FASCICULE DE BREVET EUROPEEN

(11) **EP 0 081 402 B2**
(45) Date de publication et mention de la décision concernant l'opposition: **30.08.1995**
(45) Mention de la délivrance du brevet: 24.05.1989
(21) Numéro de dépôt: 82402010.1
(22) Date de dépôt: 29.10.1982
(51) Int. Cl.: F16L 9/22, E21D 11/15, E04H 9/12, E04H 7/28, E04H 7/30

(54) **Procédé d'obtention de structures creuses, telles que des conduites, silos ou abris.**
Verfahren zur Herstellung von hohlen Elementen wie etwa Leitungen, Silos oder Bunkern
Process for obtaining hollow structures such as ducts, grain tanks or shelters.

(30) Priorité: 17.11.1981 FR 8121510; 11.06.1982 FR 8210266
(43) Date de publication de la demande: 15.06.1983
(60) Demande divisionnaire: 87200617.6
(73) Titulaire: Matière, Marcel, F-15000 Aurillac (FR)
(72) Inventeur: Matière, Marcel, F-15000 Aurillac (FR)
(74) Mandataire: Phélip, Bruno

(56) Documents cités:
- BE-A- 683 085
- CN-A- 689 778
- DE-A- 2 052 866
- DE-A- 2 157 191
- DE-A- 2 461 863
- DE-A- 2 623 179
- DE-A- 2 856 161
- FR-A- 733 098
- FR-A- 935 351
- FR-A- 1 027 788
- FR-A- 2 030 937
- FR-A- 2 075 442
- FR-A- 2 223 513
- FR-A- 2 354 502
- GB-A- 850 599
- GB-A- 873 248
- GB-A- 1 232 299
- GB-A- 2 124 277
- US-A- 1 474 808
- US-A- 1 572 197
- US-A- 2 400 071
- US-A- 3 733 831
- US-A- 4 018 054
- US-A- 4 314 775
- Le Calcul et la Conception des ouvrages en béton armé - Pierre Charron - Eyrolles 1968 - page 591 - chapitre unique
- "Iowa Engineering Experiment Station - The Theory of External Loads on Closed Conduits in the Light of the latest Experiments", Marston, Iowa State College, 19.02.1930, pages 1 - 17
- Aide Mémoire Dunod, "Résistance des Matériaux et des Bétons", Ch. Mondin - Dunod 1957, chapitre IX - Voûtes - pages 196 - 203
- Aftes - Tunnels et Ouvrages Souterrains - no.14, mars/avril 1976, pages 50 - 76
- "Die Bautechnik", 1979 - Pr. von Halasz - Heft 1 - 12, pp. 259 - 260
- "Der Bauingenieur" - Pr. Sattler - Springer Verlag 1965, pp.297-298
- "Der Bauingenieur" - Heinz Duddek, 1972, Vol. 2, pp. 43 - 47
- "Leçons sur la Résistance des Matériaux"- E. Dreyfuss, Ed. Eyrolles 1956, p. 448
- "Leçons sur la Résistance des Matériaux" - E. Dreyfuss - Tome II - Ed. Eyrolles, 1956, page 37
- Forschung und Praxis - no. 23 - juillet 1980, pp. 147 - 148
- "Handbook of Drainage and Construction Products", The Armco Int. Corp., Middletown, Ohio, USA, 1955
- "Ingénieur des Ponts et Chaussées", 1963, G. Dreyfuss
- "Structural Behaviour of a Reinforced Concrete Arch Culvert", Division of Structures and Engineering Services, California Department of Transportation , juin 1977
- Travaux, TP de Françe, "Prix de L'Innovation 1983", supplement janvier 1984
- Der Bauingenieur, 1972, Pr. M. Duddeck, "Zu den Berechnungsmethoden und zur Sicherheit von Tunnelbauten", Heft 2, pp. 43 - 51
- Techniques de l'Ingénieur 5-1976, "Principles de la préfabrication des bâtiments", Gilbert Lacombe, pp. 37 - 44
- "Traité de la Préfabrication", Dr.-Ing. T. Koncz, Vander, 1972

## Description

La présente invention est relative à un procédé d'obtention d'un conduit, ayant la forme d'un cylindre reposant sur le sol par une base ayant une courbure transversale d'ensemble plus faible que le reste de la paroi du conduit.

Référence est faite à la demande divisionaire européenne 244 890, publiée le 11 novembre 1987.

De telles structures sont typiquement des conduits de grande section, par exemple au delà des fabrications industrielles traditionnelles de l'ordre de 2 m², enterrés ou non, servant à l'adduction d'eau ou d'autre fluide sous pression ou sans pression, ou bien pour des passages de câbles et/ou autres conduits ou la circulation et le stationnement de personnes ou de véhicules.

L'invention est également applicable à des conduits de plus faible section, par exemple jusqu'à 1 m². Elle est aussi applicable à l'obtention de structures de forme analogues mais relativement courtes, utilisables comme caves, silos ou abris anti-atomiques ou autres.

Quoique l'invention soit essentiellement décrite en se référant à des conduits de grande section, elle n'est donc pas limitée à ce domaine technique.

Diverses techniques sont utilisées pour la mise en place de conduits destinés à des adductions d'eau, des transports pétroliers, des passages de câbles, ou autres conduits, etc.

La technique la plus fréquente consiste à utiliser des tronçons tubulaires, à section circulaire, qui sont mis bout à bout et assemblés par diverses méthodes. Cette technique présente des inconvénients qui augmentent avec le diamètre de la conduite, même si l'on diminue la longueur des tronçons: fabrication, transports, manutentions et mise en place. De toute façon, outre les problèmes de fabrication, des problèmes d'encombrement se posent dès qu'on approche d'un diamètre extérieur de 2,50 m qui correspond à la limite normale des gabarits routiers. Pour des débits importants, on est amené à prévoir plusieurs conduits en parallèle, ce qui est une solution coûteuse, ou bien à construire le conduit sur place, suivant les techniques des constructions de maçonnerie, voire de travaux en galeries également coûteuses et à longs délais de fabrication ou réalisation.

Dans un procédé connu, décrit par exemple dans les documents FR-A-2 030 937 et DE-A-2 157 191 le conduit est constitué de tronçons mis bout à bout et réalisés par assemblage d'éléments longitudinaux préparés à l'avance, correspondant chacun à une partie de la section transversale de la paroi et prenant appui les uns sur les autres le long de joints longitudinaux. Les éléments sont réalisés en tôle métallique ondulée, et, par conséquent, faciles à transporter et à assembler par simple boulonnage ou rivetage.

D'autre part, la forme circulaire des conduits est, on le sait, la mieux adaptée au cas des fortes pressions internes. Elle est d'autre part la plus facile à obtenir lorsqu'on confectionne des tronçons correspondant à toute la section du conduit. Elle présente en revanche des inconvénients dans les autres utilisations. Un conduit circulaire crée, dans le sol qui supporte son poids, des contraintes qui présentent un maximum accusé dans sa région médiane. Il s'ensuit que, si le sol est meuble, des tassements différentiels importants peuvent se produire après la pose. La forme circulaire se prête mal à une utilisation de l'espace lorsque celui-ci est encombré comme c'est souvent le cas en milieu urbain. Enfin, le poids du conduit est comparativement trop élevé; en effet la matière est, dans le cas de tronçons unitaires couvrant chacun toute la section, répartie de façon uniforme sur toute la périphérie alors que les contraintes ne le sont pas.

Dans les documents FR-A-2 030 937 et DE-A-2 157 191, il est prévu, dans certains cas, de réaliser des conduits à section aplatie, chaque tronçon comprenant, en section transversale, une partie Inférieure formant une base à fond plat reposant sur le sol et se raccordant sur les côtés à une partie supérieure courbe formant voûte. Mais on peut difficilement concevoir, dans le cas de grandes sections, que le conduit soit constitué uniquement de parois métalliques directement enterrées car, même s'ils sont en tôle ondulée, de tels éléments ne présentent qu'une faible résistance aux contraintes extérieures, ce qui rend incertaine la conservation de la forme de la section et de l'étanchéité des joints. C'est pourquoi, normalement, les parois métalliques limitant le conduit ne sont que des coffrages perdus nécessitant un bétonnage ultérieur. En outre, les ondulations augmentent la résistance du conduit à la circulation des fluides.

On connaît également par le brevet FR-733 098 ou le brevet US-2 400 071, des techniques consistant à assembler un grand nombre d'éléments de petites dimensions pourvus chacun de rebords transversaux servant à l'assemblage avec les éléments voisins. Le grand nombre d'éléments oblige à leur donner une forme identique, ce qui entraîne l'adoption d'une section de forme circulaire, et dans ce cas, la résistance aux contraintes impose que les jonctions soient alternées dans le sens longitudinal. On a bien prévu dans le brevet US-2 400 071 de tenir compte de certaines des contraintes qui s'exercent sur la paroi. et d'utiliser pour la partie supérieure de la section d'un tunnel des éléments à plus faible résistance que pour la partie inférieure, mais d'une part un assemblage à joints alternés d'éléments de caractéristiques différentes présente une solidité incertaine, et d'autre part cela introduit une complication supplémentaire dans le montage par assemblage d'un grand nombre de petits éléments, alors qu'un tel montage est difficile à faire exécuter de façon parfaite par un personnel peu qualifié.

Ainsi, il apparaît qu'il existe un besoin non résolu d'un procédé qui permette l'obtention de structures creuses, cylindriques, reposant sur le sol le long d'une génératrice, à section de forme aplatie à la base, notamment de conduits de section importante, ou de structures analogues, ce procédé permettant d'aboutir à des structures ayant une grande résistance mécanique avec des prix de revient de fabrication, de transport et de mise en place considérablement réduits par rapport aux techniques actuelles.

La présente invention fournit donc un procédé d'obtention d'un conduit correspondant au caractéristiques de la revendication 1. Ce conduit est limité par une paroi cylindrique non de révolution, reposant sur le soi par une base ayant une courbure transversale d'ensemble plus faible que le reste de la paroi par assemblage sur place d'éléments longitudinaux préparés à l'avance, correspondant chacun à une partie de la section transversale de la paroi du conduit et prenant appui les uns sur les autres le long de joints longitudinaux, chaque tronçon étant constitué, en section transversale, d'au moins deux éléments, respectivement un élément inférieur formant une base à fond plat et deux côtés de raccordement avec un élément supérieur courbe formant voûte.

Conformément à l'invention on procède à un calcul préalable des contraintes de l'ensemble de la structure en tenant compte de tous les paramètres connus concernant le site d'installation, les conditions d'utilisation et les caractéristiques intrinsèques du conduit, on détermine en fonction du résultat de ce calcul la forme des éléments longitudinaux de telle façon que les joints longitudinaux entre éléments adjacents soient au voisinage des 〈〈noeuds de contraintes〉〉 c'est-à-dire des points où la valeur absolue des contraintes transversales à la paroi passe par un minimum, puis on procède à un calcul des contraintes élément par élément et, en fonction du résultat de ce calcul, on détermine la forme exacte de la courbure, l'épaisseur de la section, et la matière de chaque élément.

Dans la généralité des cas, les joints de structures selon l'invention ne sont pas en disposition alternée. Au contraire les joints longitudinaux sont en prolongement les uns des autres de part et d'autre de chaque joint transversal.

Le procédé selon l'invention présente un premier avantage par rapport à la technique actuelle à savoir que le transport est facilité. Si l'on suppose en effet que la dimension maximale admissible soit 2,5 m, la technique actuelle permet seulement le transport unitaire de tronçons de diamètre extérieur au plus égal à 2,5 m. Si les éléments selon l'invention correspondent chacun à un quart de la section de conduit, celui-ci pourra avoir, une fois terminé un diamètre de 3,5 m environ, soit une section de surface double, et si les éléments correspondent à un sixième de la section, celui-ci pourra avoir une fois terminé un diamètre de 4,4 m environ soit une surface de section triple. De plus, pour une même hauteur de 2,5 m on pourra disposer, dans le même volume, un nombre considérable d'éléments unitaires, empilés les uns sur les autres, si bien que le même véhicule de transport sera utilisé à sa charge utile maximale. En revanche, la longueur totale des jonctions à effectuer, par soudure ou autre moyen, est évidemment augmentée. Il faut observer qu'il s'agit, normalement, de joints rectilignes qui sont bien plus faciles à obtenir ou exécuter que des joints circulaires, et que le nombre de ces derniers peut être au contraire réduit du fait de la plus grande longueur unitaire des éléments, permise par leur poids unitaire plus réduit.

Un autre avantage de l'invention résulte de la forme non-circulaire de la structure, on a indiqué plus haut les inconvénients d'une forme circulaire.

En outre, grâce à la section de forme aplatie à la base, on obtient une amélioration considérable de la répartition des contraintes engendrées dans le sol sous-jacent, et les mouvements de celui-ci peuvent être réduits de façon très importante. Un autre avantage de telles formes est une hauteur plus faible à section égale, d'où réduction des frais de fouille (terrassements, blindages, rabattements de nappe phréatique, etc.). D'autre part, lorsque la consistance du sol porteur l'exige (nappe aquifère notamment) on peut intégrer au conduit un lestage obtenu au moyen de masses de métal ou de béton qui viennent s'accrocher, par un boulonnage approprié, sous le radier dudit conduit. Bien entendu, la masse du lestage est calculée en fonction des données propres au site concerné et chacun des éléments de lestage peut être également préfabriqué. On peut également ancrer le conduit au sol par ce même procédé de boulonnage lequel est rendu plus facile depuis l'intérieur par la forme aplatie du radier.

D'autre part, le calcul préalable des contraintes auxquelles seront soumis les éléments de la conduite, et l'utilisation du résultat de ce calcul pour déterminer l'épaisseur de chaque élément, la variation de cette épaisseur d'un point à l'autre de la section, la matière dont est fait chaque élément et la situation des joints longitudinaux, offrent des avantages importants.

Il est fréquent en effet, que la partie supérieure d'un conduit n'ait qu'un rôle de protection et ne soit soumise qu'à des contraintes limitées. D'autre part, le poids du fluide transporté, quand il s'agit d'eau ou d'un autre liquide en écoulement libre, agit évidemment plus à la partie inférieure qu'au sommet. De plus l'étanchéité obtenue aux joints d'assemblage autorise le conduit à supporter des pressions internes et, de ce fait, à être utilisé en conduite forcée. On notera également que, dans sa forme définitive, le conduit constituant un ensemble homogène et monobloc, il ne sera pas nécessaire de réaliser des butées aux changements de direction, générateurs de poussées longitudinales. La possibilité d'adapter l'épaisseur et la matière de l'élément permet de réaliser d'importantes économies sur le prix de revient et sur le transport.

Comme on l'a dit plus haut, les divers éléments ont des épaisseurs différentes selon le résultat du calcul des contraintes. Ils peuvent aussi être réalisés avec des matériaux différents, à condition toutefois que, le cas échéant, les précautions nécessaires aient été prises pour éviter la corrosion par effet de couples électrochimiques.

Parmi les matériaux préférés, on peut citer, pour leur prix peu élevé et leurs facilités d'obtention et d'assemblage par soudure et/ou autres moyens, les fontes ductiles, mais d'autres matériaux peuvent être envisagés seuls ou en combinaison, tels que l'acier, les alilages d'aluminium, d'autres métaux, les plastiques renforcés ou non par des fibres, le béton armé ou non, précontraint ou non. Dans ces deux derniers cas, il est évident que les soudures dont on a parlé plus haut sont à remplacer par des liaisons appropriées.

Dans le cas où les éléments de conduit sont réalisés par moulage monobloc ou bien par profilage continu de section, notamment par filage, de matières telles que la fonte ductile, l'acier, le béton armé, des résines, etc., on utilise avantageusement un moule ou outillage dont la section transversale est profilée de manière à reproduire en agissant sur la surface intérieure de l'élément de conduit, les variations précitées de profil optimal et également la variation transversale de l'épaisseur.

Les changements directionnels s'obtiennent par des éléments préfabriqués courbes ou en pans coupés, spécialement calculés et adaptés à la géométrie imposée.

La confection d'un conduit selon l'invention, c'est-à-dire par éléments qui ne correspondent qu'à une partie de la section mais qui peuvent, par compensation, être de longueur importante, pose des problèmes spécifiques au moment de l'assemblage; ces problèmes ont pu être résolus par le procédé d'assemblage suivant, qui se trouve donc en liaison étroite avec l'objet principal de l'invention. Selon ce procédé, on procède à l'assemblage initial des éléments en les reliant entre eux tant longitudinalement que transversalement par des moyens permettant un déplacement relatif limité des éléments adjacents et en intercalant entre eux un joint d'étanchéité en matière souple, et on procède ensuite à l'assemblage définitif et rigide des éléments entre eux lorsque les terrains environnants et l'ensemble du conduit se sont stabilisés. De préférence, l'assemblage initial des éléments entre eux est fait à l'aide de boulons traversant au moins un des éléments par un trou élargi en conséquence.

Toutefois d'autres modes de jonction peuvent se révéler plus avantageux, en particulier dans les joints où les fortes contraintes imposent des épaisseurs de parois importantes. Dans ces cas, on préfère opérer selon une ou plusieurs des modalités suivantes.
- pour réaliser la jonction longitudinale et éventuellement la jonction transversale des éléments de conduit, on forme des parties en creux ou en saillie placées dans les zones des bords correspondants et pouvant coopérer par conjugaison de formes et/ou de forces pour la création des joints longitudinaux et transversaux nécessaires;
- pour la création de joints longitudinaux, on forme une nervure sur chacun des bords de deux éléments à joindre et on répartit le long des deux nervures ainsi formées des moyens de blocage;
- les moyens de blocage sont des étriers rigides ou élastiques;
- les étriers sont fixés à l'aide de pièces rigides ou élastiques emmanchées entre la surface intérieure de l'étrier et le flanc de la nervure correspondante ou bien par déformation élastique des étriers eux-mêmes;
- des garnitures d'étanchéité, d'une section profilée en correspondance aux bords des joints longitudinaux et transversaux, sont interposées entre lesdits bords et leur serrage étanche est assuré à l'aide desdits étriers ou bien à l'aide de colliers, cerclages, câbles de précontrainte ou autres moyens;
- dans les cas où les éléments sont formés de matières soudables ou scellables, les joints longitudinaux et transversaux sont réalisés par apport de matière de soudage ou de scellage correspondante.

Suivant une modalité intéressante, pour faciliter la mise en place et la stabilisation de la conduite, il est prévu des éléments stabilisateurs à section longitudinale triangulaire, sur les côtés de la face inférieure de la conduite. Ces éléments ont une face plane horizontale qui est à peu près au niveau du fond de la conduite, une face plane à peu près verticale ou inclinée, et une face qui épouse celle de la conduite. Ces éléments stabilisateurs sont de préférence, discontinus et implantés de place en place le long de la conduite pour empêcher l'élément inférieur de s'incliner sur son axe longitudinal après sa mise en place.

Ces éléments stabilisateurs peuvent être fixés par boulonnage, soudage ou autre sur l'élément de structure de la conduite. Dans le cas où celui-ci est obtenu par moulage (béton) ils peuvent aussi faire corps avec lui.

Outre leur intérêt pour la stabilisation de la conduite entière, les éléments stabilisateurs sont avantageux dans le cas où la conduite est formée d'éléments dont certains constituent le fond et d'autres des parois latérales avec une orientation générale verticale: en prévoyant que les éléments stabilisateurs sont fixés au préalable sur les éléments de paroi latérale, ou bien sont d'une seule pièce avec ces éléments, ceux-ci deviennent capables de se tenir droits en reposant sur le sol, ce qui facilite l'obtention de leur fonction avec les éléments de fond posés en premier. Ensuite, la mise en place des éléments formant le haut peut s'effectuer en les posant sur les éléments de paroi latérale.

Dans le cas où la section de la structure creuse, est relativement faible, par exemple un conduit de 1 à 4 m² environ, on peut prévoir que la section du conduit est formée par deux éléments seulement dont l'un correspond à la partie inférieure et aux côtés du conduit et l'autre forme un couvercle. Ces éléments, ou au moins une partie d'entre eux peuvent être faits en béton ou autre matière moulée.

Suivant une autre méthode d'obtention des joints utilisables, dans le cas ou les éléments sont réalisés en béton ou autre matière moulée, il est prévu, sur les bords des éléments longitudinaux, des cornières en matière soudable ou collable sur lesquels on fixe, après mise en place et, de préférence après stabilisation, des pièces plates pour l'étanchéité en un matériau compatible avec celui des cornières.

Dans certains cas, en particulier lorsqu'il s'agit de transporter ou stocker des fluides dangereux, ou pour la construction d'abris anti-atomiques, il convient d'obtenir une étanchéité parfaite même en cas de mouvements de terrain ou d'explosion à proximité, et si les éléments sont construits en béton ou autre matière qui pourrait se fissurer ou perdre son étanchéité d'une autre façon, on prévoit avantageusement un revêtement ou chemisage intérieur étanche, solidaire ou non des éléments de la structure.

Dans certains cas, ce revêtement peut constituer une partie de coffrage perdue pour les éléments de la structure. Si le revêtement est en tôle ou autre matière métallique ou non métallique soudable ou collable, des pièces plates du type indiqué ci-dessus peuvent être soudées ou collées sur les joints de ce revêtement, ou bien on peut souder ou coller directement les parties de revêtement entre elles au niveau des points.

Si la structure, conduit ou abri, est formée d'éléments en béton, celui-ci fournit la résistance à l'écrasement, cependant qu'un revêtement intérieur en tôle métallique ou non ou matière plastique, soudé, collé ou appliqué par enduit quelconque procure une étanchéité absolue aux contamination ou infiltrations, radioactives ou autres, même si des mouvements du terrain ou dus à une explosion ont déformé la structure.

Les exemples ci-après sont essentiellement relatifs à des conduits de grande section, mais il est facile de se rendre compte que ce qui y est dit est également valable pour des silos, des abris ou structures analogues.

Dans le cas d'un abri anti-atomique préfabriqué, on met en place des éléments de paroi longitudinale, qui peuvent être constitués de la même façon que pour les conduits de grande section, et l'abri est fermé à ses extrémités par des parois transversales planes ou bombées. De préférence, on donne à l'abri un fond sensiblement plat, et les éléments de base ou de côté sont pourvus d'éléments de stabilisation latérale, intégrés lors de la fabrication ou ajoutés ultérieurement, de façon à empêcher un basculement de l'abri autour de son axe longitudinal.

Avantageusement, on prévoit un revêtement intérieur étanche, notamment si l'abri est construit en béton.

L'abri peut être mis en place très rapidement, car il est formé d'éléments séparés qui peuvent se transporter facilement pour être assemblés sur site. Il peut être placé dans une fouille, qui est ensuite rebouchée, ou même, dans certains cas être simplement posé sur le sol. On notera que la forme à base aplatie procure une résistance améliorée aux effets de souffle, par rapport à un abri maçonné de forme cylindrique ou parallèlépipédique.

L'invention va maintenant être décrite plus en détail à l'aide d'exemples de réalisation, non limitatifs, illustrés par les dessins parmi lesquels:
Figs. 1 à 3 sont des coupes transversales schématiques de conduits selon l'invention.
Fig. 4 est une coupe partielle illustrant un mode d'assemblage.
Fig. 5 est une vue en perspective schématique d'un conduit dont les différents tronçons sont formés d'éléments longitudinaux dont les joints longitudinaux et transversaux d'assemblage sont mis en évidence.
Fig. 6 représente un exemple d'éléments de conduit présentant une réduction graduelle d'épaisseur radiale vers le centre.
Fig. 7 représente un exemple d'éléments de conduit présentant une augmentation graduelle d'épaisseur transversale de la gauche vers la droite.
Fig. 8 est une coupe transversale d'un joint longitudinal montrant un mode d'assemblage à nervures et étriers.
Fig. 9 représente un exemple de profil & emboîtement du bord correspondant de deux éléments de conduit pour former un joint longitudinal ou transversal.
Fig. 10 représente un autre exemple de profilage des bords d'éléments pour former un joint longitudinal ou transversal.
Fig. 11 représente encore un autre exemple de profilage des bords d'éléments pour former un joint longitudinal ou transversal.
Fig. 12 représente un exemple de réalisation d'un joint transversal à emboîtement dont i'étanchéité est assurée par un joint annulaire de profil spécial qui est comprimé à l'aide d'un cerclage approprié.
Fig. 13 est une coupe transversale du conduit de la figure 12, montrant le cerclage du joint d'étanchéité.
Fig. 14 montre l'établissement d'un joint dans le cas d'éléments en béton armé.
Fig. 15 est un diagramme illustrant des résultats de calculs des contraintes.
Fig. 16 est une coupe d'une section de structure creuse en béton armé correspondant au calcul de

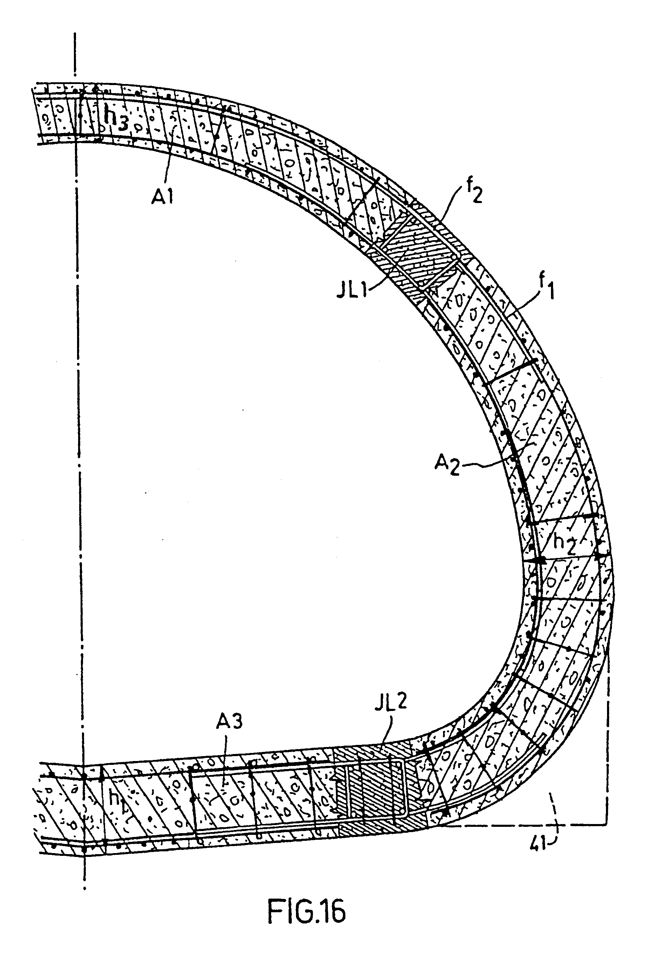

la figure 16.

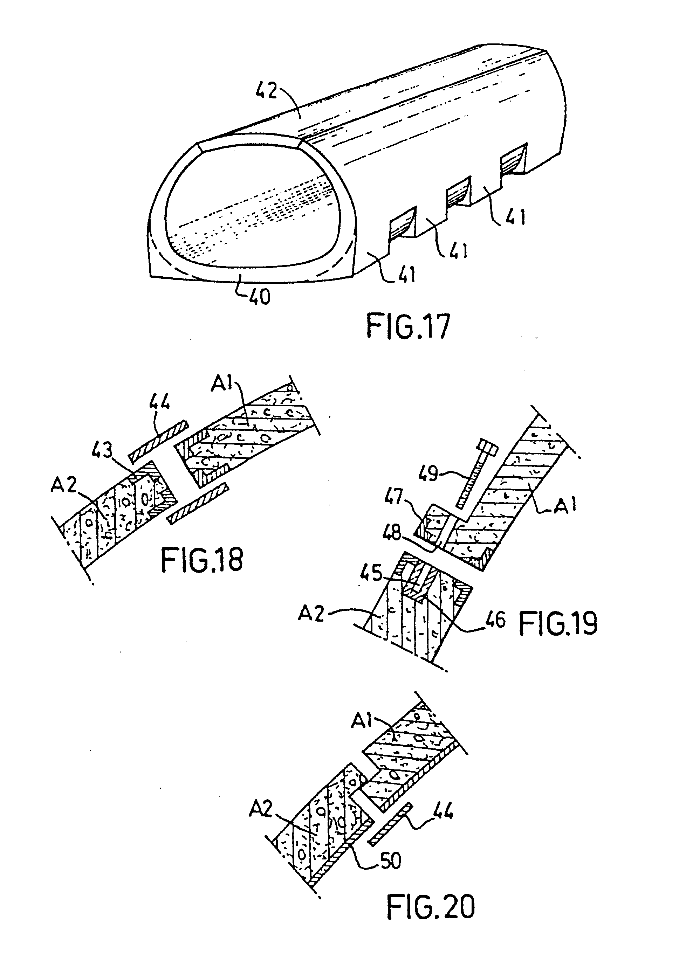

Fig. 17 représente un autre exemple de réalisation, spécialement adapté à des conduits de petite section.
Fig. 18 représente un mode d'obtention de l'étanchéité du joint.
Fig. 19 représente un mode de serrage du joint.
Fig. 20 représente un autre mode d'obtention de l'étanchéité.

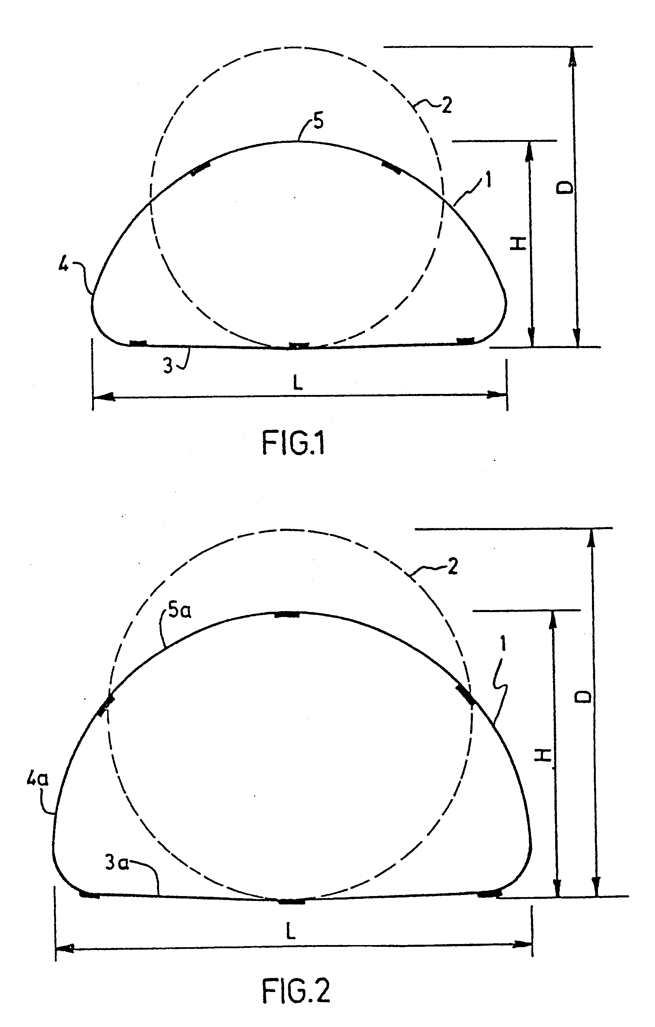

La figure 1 montre, en trait plein, la coupe d'un conduit 1 obtenu par le procédé de l'invention, et pour comparaison en tirets, la coupe d'un conduit circulaire 2 de même section. Le conduit selon l'invention est obtenu par assemblage de cinq éléments de même longueur.

Deux éléments de base 3 sont sensiblement plans; deux éléments de côté 4 ont une courbure variable plus forte vers le bas que vers le haut: le profil est complété par un élément supérieur 5, à section en arc de cercle. L'exemple représenté correspond, à titre indicatif à une section de 10 m². La hauteur H totale est de 2,40 m et la largeur L de 5,00 m, à comparer avec le diamètre D du conduit circulaire correspondant, qui est de 3,57 m. La fouille nécessaire pour le conduit selon l'invention est plus large à la base que pour le conduit circulaire, mais elle est moins profonde; et au total, le volume à excaver peut être inférieur et le travail plus facile à réaliser.

La figure 2 montre une autre forme de conduit selon l'invention, dans lequel les éléments du fond 3a sont légèrement incurvés, et qui comporte deux éléments supérieurs 5a au lieu d'un.

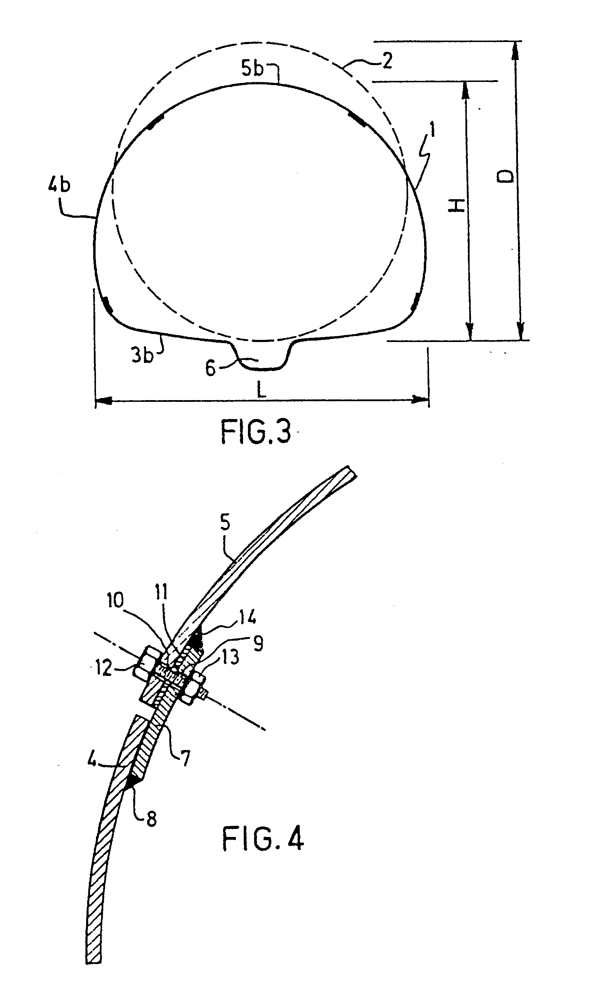

La figure 3 montre encore une autre réalisation, qui présente la particularité que l'élément de fond 3b forme une cunette centrale 6. On a prévu que la cunette est au milieu de l'élément 3b et est légèrement évasée si bien que des éléments sont identiques et empilables pour le transport, mais bien entendu d'autres dispositions sont possibles. Suivant la technique classique, l'adjonction d'une cunette pose un problème quasi-insoluble.

La figure 4 illustre un exemple du mode de jonction entre deux éléments 4, 5 placés comme des éléments 4a et 5a de la figure 2.

L'élément 4 est dans une première phase pourvu d'une plaque de raccordement 7, fixée par une soudure 8, laquelle peut être exécutée en usine ou sur place. Cette plaque 7 présente des trous élargies 9, qui, lors du montage, viennent en correspondance avec des trous élargis 10 de l'élément 5. Au moment du montage on intercale entre l'élément 5 et la plaque 7 un joint souple 11 en élastomère ou analogue, puis on procède à la jonction à l'aide d'une vis 12 et d'un écrou 13.

Lorsque le jeu d'éléments correspondant à la section suivante du conduit est monté, de légers mouvements relatifs des éléments 4 et 5 peuvent apparaître, par exemple sous l'effet de variations de niveau du fond de la fouille. De légers mouvements peuvent aussi être la conséquence du tassement des terrains sous-jacents. Tous ces mouvements sont rendus possibles par l'élargissement des trous 9 et 10. Quand ces mouvements ont cessé de se produire, on peut procéder à la jonction définitive des éléments par une soudure 14. La vis 12, et l'écrou 13 peuvent en outre être retirés, et les trous 9 et 10, ou seulement l'un des deux, peuvent être obturés par soudure.

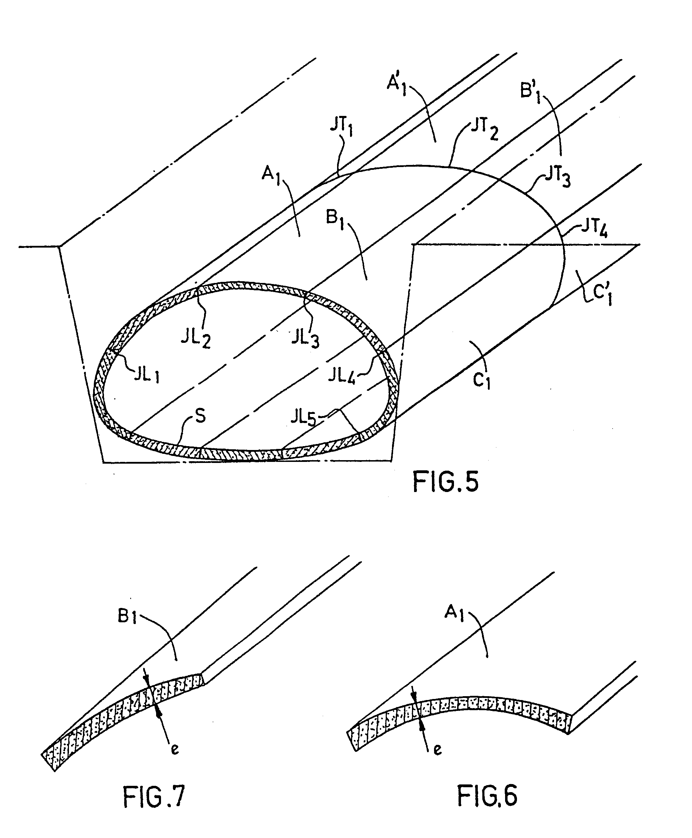

Sur la figure 5, on a représenté en vue en perspective schématique un conduit obtenu par mise en oeuvre du procédé conforme à l'invention. Ce conduit comprend des éléments longitudinaux tels que A1, B1, C1, etc. pour le premier tronçon A'1, B'1, C'1, etc. pour le second tronçon, et ainsi de suite; ces éléments sont reliés entre eux par des joints longitudinaux, JL1, JL2, JL3, JL4, etc. et par des joints transversaux JT1, JT2, JT3, JT4, etc.

Le procédé selon l'invention consiste dans une première étape à déterminer de manière connue par le calcul le profil optimal de section du conduit en fonction des paramètres connus concernant le site d'installation, les caractéristiques intrinsèques du conduit proprement dit et ses conditions d'utilisation. Dans le calcul on fait intervenir les efforts sollicitant le conduit, notamment:
- le poids propre du conduit,
- le poids du fluide passant dans le conduit,
- la pression à établir dans le conduit, (conduite forcée notamment),
- les surpressions éventuelles résultant de l'usage d'appareils hydrauliques (vannes, etc.),
- la pression hydrostatique d'une nappe d eau dans laquelle peut se trouver éventuellement noyé le conduit,
- la charge des remplais où le conduit est enfoui,
- des surcharges fixes existant éventuellement sur les remplais,
- des surcharges mobiles sollicitant éventuellement les remblais,
- des variations de températures et d'hygrométrie,
- des réactions d'appuis, etc.

Comme indiqué dans le préambule, il est intéressant d'arriver à un profil dont la partie inférieure est assez aplatie et dont la partie supérieure correspond à une courbe résultant de l'optimisation du calcul des contraintes.

La seconde étape consiste à diviser le profil optimal de section ainsi obtenu en tronçons adjacents correspondant chacun à un élément longitudinal, tel que A1, B1, etc., et procurant ensemble une surface intérieure sensiblement continue, désignée par S sur la figure 5.

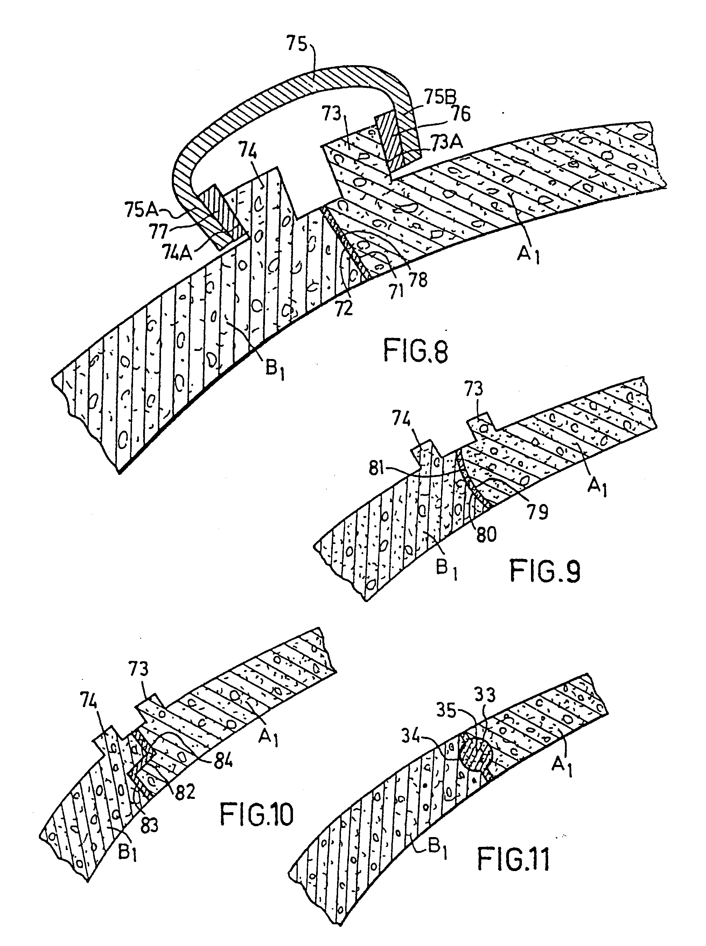

La troisième étape consiste à donner à la section transversale d'au moins certains desdits éléments une épaisseur variable pour l'adapter aux contraintes exercées aux différents points de la section de l'élément considéré. Ainsi on a mis en évidence sur les figures 6 et 7 des coupes transversales d'éléments de conduit montrant comment peut varier l'épaisseur de matière. Cette caractéristique est extrêmement importante, aussi bien pour la fabrication que pour le transport et l'assemblage de l'élément puisque la quantité de matière, et par conséquent le poids et le prix de revient sont définis, de la manière la plus exacte possible, en fonction des paramètres régissant la réalisation du conduit final. Si on considère l'application de l'invention à la construction d'oléoducs, d'aqueducs, etc., de longueurs importantes, on se rend compte aisément de l'influence d'un gain de poids sur la rentabilité finale d'exécution de l'ouvrage.

Les éléments de conduit conforme à la présente invention peuvent être constitués de différents matériaux et être fabriqués, en correspondance, par différents procédés. Ainsi il est possible d'envisager la fabrication des éléments tels que A1, B1, C1, etc. en un métal tel que de la fonte ductile, de la fonte à graphite sphéroïdal, de l'acier, des alliages d'aluminium, etc. Pour de tels matériaux, il est possible de mettre en pratique différents procédés comme par exemple la coulée pièce par pièce, la coulée continue, le filage, le forgeage, le laminage différentiel, etc. Tous ces procédés permettent de réaliser d'une façon homogène des parties en creux ou en saillie devant servir ultérieurement, lors de l'assemblage des éléments, à l'établissement de joints longitudinaux et transversaux, comme cela sera précisé dans la suite.

Il est également possible de réaliser des éléments de conduit en d'autres matériaux que des métaux, notamment en béton armé, en matières plastiques ou de résines renforcées ou non par des fibres, etc. Dans de telles conditions, les éléments sont réalisés par moulage à l'aide de moules ou de coffrages, qui permettent également d'obtenir les parties en saillie et en creux précitées.

Tous les procédés de mise en oeuvre des matériaux définis ci-dessus pour la réalisation des éléments de conduit selon l'invention font intervenir des outillages, des moules, des coffrages, etc., qui doivent tenir compte des caractéristiques du procédé d'obtention de conduits selon l'invention dans les conditions suivantes:
- la surface intérieure de l'élément de conduit fabriqué doit correspondre au profil optimal de section du conduit, déterminé par le calcul en fonction des paramètres connus concertant le type d'installation, les conditions d'utilisation du conduit et ses caractéristiques intrinsèques. Par l'expression 〈〈profil optimal〉〉, on entend, dans le cas d'une conduite où les conditions extérieures varient peu, un profil moyen applicable à cette conduite sur une certaine longueur,
- chaque élément doit présenter les dimensions hors-tout permettant son assemblage avec les autres éléments du conduit et les différentes épaisseurs des éléments doivent être calculées pour leur permettre de résister aux contraintes auxquelles ils sont soumis.

L'étanchéité finaie est obtenue par différents moyens appropriés à chaque matériau utilisé, elle est créée depuis l'intérieur du conduit, après stabilisation définitive (tassement, compensation des dilatations, compactage, etc.).

On va maintenant décrire comment s'effectue l'assemblage des différents éléments pour former un conduit, en se référant aux figures 8 à 12 qui donnent quelques exemples de réalisation de joints longitudinaux et de joints transversaux. Ainsi on a représenté en coupe transversale sur la figure 4 un joint longitudinal établi entre les deux éléments de conduit A1 et B1. Dans ce cas il est prévu, de part et d'autre des points définis par les deux surfaces 71, 72 des éléments A1, B1, des nervures longitudinales extérieures respectives 73, 74 qui s'étendent sur toute la longueur des éléments de conduit correspondants. Ces nervures peuvent être formées lors de la coulée, du filage, du laminage, ou du moulage des éléments correspondants ou bien elles peuvent être également rapportées par soudage, dans ce cas elles peuvent être discontinues. Ces deux nervures permettent, comme le montre la figure 8, la fixation simple et efficace d'un étrier de biocage 79, à l'aide de coins 76, 77 qui sont emmanchés en position entre l'ètrier et la nervure correspondante en opérant par exemple par marlelage ou par tout autre processus semblable.

Pour absorber les reéactions s'exerçant dans une direction perpendiculaire au profil de section du conduit, il est approprié de donner aux surfaces de délimitation latérale des éléments de conduit A1, B1, etc., des formes leur permettant d'absorber les contraintes de la meilleure façon possible, compte tenu de tous les paramètres ayant trait aux conditions de fabrication et d'utilisation du conduit, et également de la matière dont il est constitué. Ainsi, à titre d'exemples non limitatifs, on a donné sur les figures 8, 9 et 10 quelques modèles de profils desdites surfaces latérales de délimitation des éléments de conduit. Sur la figure 8, les surfaces de délimitation 71 et 72 sont inclinées par rapport au plan perpendiculaire au profil de la section du conduit. Un tel profilage des surfaces du joint convient par exemple lorsque les charges statiques s'exerçant sur le conduit sont prédominantes.

Sur la figure 9, les deux surfaces de délimitation latérales des éléments de conduit A1, B1 qui sont désignées par 79 et 80, ont des formes arrondies correspondantes de manière à absorber des réactions s'exerçant dans les deux sens dans ledit plan perpendiculaire au profil de section.

Sur la figure 10, on a représenté des surfaces de délimitation 82 et 83 qui forment des gradins permettant de réaliser en emboîtement.

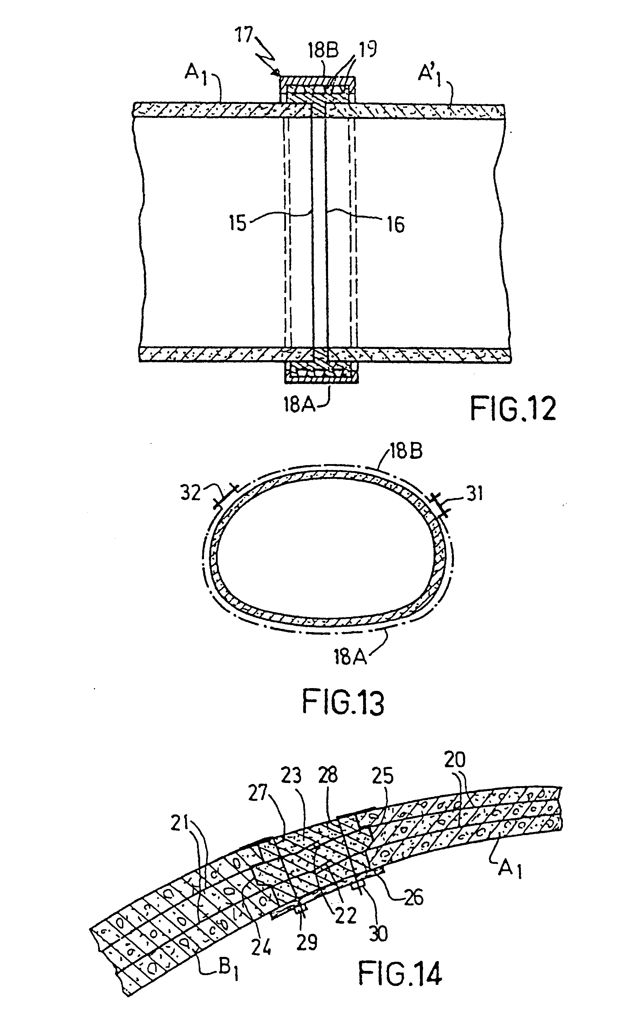

Sur les figures 11, on a représenté des profils 33 et 34 définissant une alvéole 35 qui peut être remplie par une matière d'étanchéité par exemple d'une résine coulée.

Il est à noter que toutes ces formes des surfaces latérales de délimitation des éléments de conduit peuvent être parfaitement réalisées par l'un quelconque des procédés de fabrication prècités. Pour établir une bonne étanchéité, il est prévu dans chaque cas, entre les surfaces correspondantes des joints longitudinaux précités, des enduits, mastics, garnitures ou autres agents d'établissement d'étanchéité, notamment en caoutchouc, naturel ou synthétique, comme indiqué respectivement en 8 sur la figure 8, en 81, sur la figure 9 et en 84 sur la figure 10.

Il est à noter à cet égard que ces joints assurent une étanchéité à la pression.

Sur la figure 14, on a représenté un joint longitudinal qui est établi entre deux éléments de conduit A1, B1 réalisés en béton armé. On a désigné par 20 et 21 les armatures respectives des éléments A1, B1. Pour réaliser la jonction, on laisse dépasser les armatures 20, 21 lors du moulage des éléments et, une fois que ces derniers ont été mis en place dans les positions prévues sur le lieu d'installation du conduit, on relie entre elles les parties extrêmes dépassantes des armatures respectives, comme indiqué en 22, puis, en utilisant des éléments de coffrage appropriés tels que 26, on coule un mortier de scellement en 23 dans l'intervalle existant afin de réaliser le joint longitudinal envisagé.

Sur la figure 14, on a mis en évidence en 24 et 25 des prpfils anguleux et en creux des bords de raccordement des éléments A1, B1. Ces profils sont destinés d'une part à faciliter l'accrochage du mortier de scellement 23 et d'autre part à parfaire l'étanchéité du joint en créant des discontinuités servant à supprimer des trajets de fuite localisés. On a désigné par 27 et 28 des organes de maintien du coffrage 26 qui est fixé en position à l'aide des écrous 29, 30.

Sur la figure 12, on a représenté un exemple de réalisation d'un joint transversal entre deux tronçons de conduit constitués respectivement par des éléments tels que A1, ... et des éléments tels que A'1... etc. On a désigné par 15 et 16 les surfaces de délimitation du joint transversal. Dans l'exemple considéré, il est prévu un joint périphérique désigné dans son ensemble par 17 et comportant d'une part une moulure radiale qui vient s'emboîter dans l'intervalle existant entre les surfaces 15, 16 et d'autre part par un anneau périphérique dont les surfaces intérieures viennent s'appliquer contre les surfaces extérieures des éléments de conduit respectifs, ledit anneau comportant sur sa surface périphérique extérieure des parties en relief 19, destinées à être aplaties par compression à l'aide d'un cerclage ou collier 18A, 18B, comme le montre la figure 13 qui est une coupe transversale du conduit de la figure 12. Dans l'exemple considéré, donné à titre non limitatif, les parties en relief 19 peuvent avoir un profil en queue d'aronde et comporter des cloisonnements dans leurs encoches afin de créer un joint du type en labyrinthe. Le cerclage d'aplatissement est réalisé en deux parties 18A, 18B reliées entre elles par des tendeurs 31, 32 qui sont actionnés pour le serrage définitif.

Il est à noter que,bien que tous les exemples de réalisation de joints entre éléments de conduit ne fassent pas intervenir de boulonnage, un tel processus n'est absolument pas exclu et qu'il est possible de former ou de fixer sur les éléments des parties analogues à des rebords et des brides qui seraient ensuite assemblées à l'aide de boulons ou organes semblables.

Dans certaines applications, il est possible, dans le cadre de l'invention, d'adopter pour le conduit une structure mixte, c'est-à-dire d'utiliser d'une part des éléments formés d'un premier matériau, par exemple du béton armé, dans une première partie du conduit, par exemple dans la partie basse comprise entre les joints longitudinaux JL1 et JL4 sur la figure 5, et d'autre part des éléments formés d'un second matériau, par exemple un métal ou une matière plastique armée ou non de fibres, dans la partie restante du conduit. Une telle structure mixte peut être recommandée dans un ouvrage d'adduction d'eau en tranchée ouverte, c'est-à-dire sans charges élevées sur le haut du conduit, en une région éloignée où il est rentable de fabriquer la partie basse en béton armé moulé et la partie haute en éléments minces, préfabriqués en usine et transportés sur chantier.

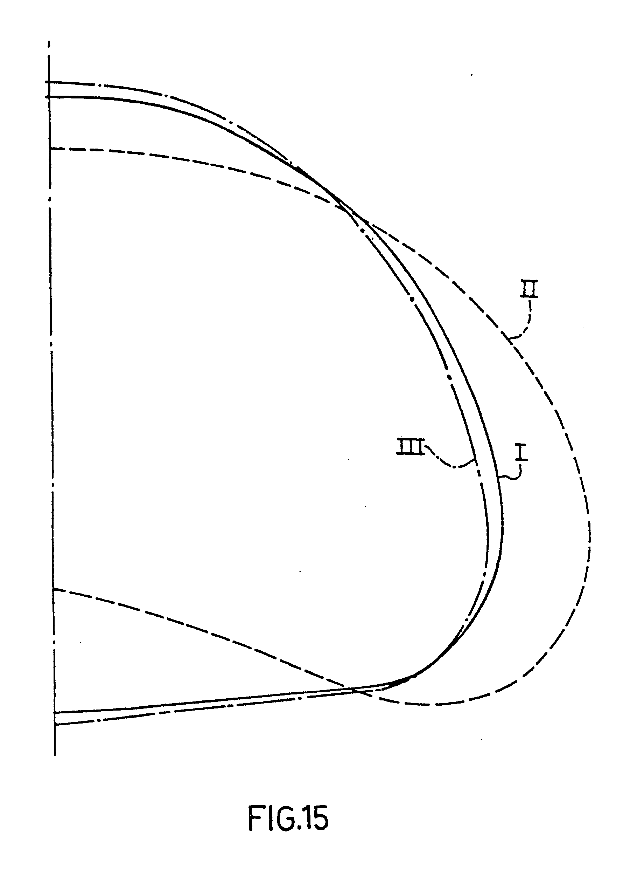

La figure 15 montre, en trait plein la forme de la fibre neutre d'une section de conduit selon l'invention (courbe I), en tirets (courbe II) la répartition du moment fléchissant correspondant à la poussée verticale des terres et en traits alternés (courbe III) la répartition du moment fléchissant correspondant à la poussée latérale des terres. Le calcul complet comporte encore la détermination d'un certain nombre de courbes analogues, correspondant, par exemple, à la pression intérieure au poids propre de la conduite, etc. Le calcul comporte ensuite la combinaison des résultats correspondant chacun à un type de contrainte.

On observe que le profil complet de la section comporte quatre zones de 〈〈noeuds〉〉, situées l'une en partie basse de la conduite, l'autre vers sa partie haute.

La figure 16 montre la demi-section d'un conduit formé de quatre éléments en béton armé.

On observe que l'épaisseur (h₁, h₂) dans les zones qui correspondent aux contraintes les plus fortes de la figure 15, c'est-à-dire au centre de la base et sur les côtés est environ 50% plus grand que l'épaisseur h₃ au sommet. Les jonctions JL1, JL2 entre éléments ont été établies dans les zones de noeuds de contrainte. Sur cette figure le repère f₁ désigne les fers d'armature noyés dans le béton des éléments préparés à l'avance et f₂ désigne les fers d'ancrage, qui ont été repliés les uns sur les autres avant d'être noyés dans le béton lors de la construction de la structure.

La figure 17 montre un exemple de réalisation adaptée à des conduits de section relativement faible: 1,5 à 4 m² environ. Dans un but de simplification, la section de la conduite est divisée en deux éléments qui peuvent être transportés séparément sans difficultés spéciale en raison de leurs faibles dimensions. L'élément inférieur 40 est en béton, et réalisé par moulage, il comprend la base, à fond plat et les côtés. On observe en plus qu'il comporte des éléments stabilisateurs 41, qui font corps avec lui, et qui permettent sa mise en place facile dans une fouille à fond plat. Ces éléments stabilisateurs sont des volumes à section de forme générale triangulaire, avec une face inférieure horizontale, ces éléments stabilisateurs ne se prolongeant pas sur toute la longueur de l'élément 40 dans un but d'allégement L'élément supérieur 42 de la conduite est de forme plus simple car il a la forme d'une gouttière retournée, à faible courbure. Il peut être réalisé soit par moulage, soit par extrusion. Au cas où l'élément inférieur 40 est réalisé par extrusion, il est clair que les éléments stabilisateurs 41 sont fixés ultérieurement, mais avant la mise en place de la conduite, par vissage, soudage ou tout moyen approprié.

Sur la figure 16 on a représenté en tirets un élément stabilisateur 41. Cette figure met en évidence un autre avantage de cet élément stabilisateur dans le cas d'une structure dont la section est formée de plus de deux éléments. On voit en effet que l'élément de côté A2, muni de l'élément stabilisateur 41 extérieur peut rester seul dans la position finale. On n'a donc pas besoin de prévoir un soutien provisoire pendant la réalisation de la jonction JL2 avec l'élément de base A3.

On notera aussi que dans le cas d'une structure posée sur le sol, l'élément stabilisateur augmente la résistance aux forces latérales tendant à renverser la structure, ce qui est avantageux dans le cas d'un abri anti-atomique ou autre, qui serait posé sur le sol et exposé à des effets de souffle.

La figure 18 montre un mode de réalisation de joints étanches dans le cas où les éléments sont en matière ni soudable, ni collable, par exemple en béton:

Chaque élément A1, A2 porte sur ses bords des cornières 43 en matière soudable ou collable, par exemple en métal ferreux, mises en place lors du moulage si l'élément est obtenu de cette manière. Des éléments plats 44 ou d'autres éléments de liaison plats en matière soudable ou collable sur les cornières 42 sont soudés ou collés sur celles- ci, éventuellement après stabilisation du sol.

La figure 19 montre un autre moyen d'assemblage des structures selon l'invention.

Un des éléments A1, comporte un trou fileté 45, qui peut être prévu dans un insert 46, Ce trou fileté étant dirigé à peu près perpendiculaire au plan du joint. L'autre élément A2 présente un épaulement 47 percé d'un trou 48 dans lequel on insère une vis 49 qui se visse dans le trou 45 en traversant avec le jeu le trou 48.

La figure 20 montre un autre mode de réalisation d'étanchéité de joint, dans laquelle les éléments A1, A2 en béton, sont pourvus intérieurement d'un revêtement d'étanchéité 50 en tôle, formant coffrage perdu. Un élément plat intérieur 44 est alors soudé directement sur ce revêtement 50. Une cornière, analogue à celle de la figure 18 peut être prévue sur l'autre bord des éléments A1, A2.

Il est fait observer qu'un certain nombre de dispositions d'assemblage décrites ci-dessus sont utilisées pour la mise en place du conduit et n'interviennent pas pour contenir à elles seules, de façon essentielle, les pressions hydrostatiques dans le cas d'utilisation en conduite forcée, ces pressions hydrostatiques étant en partie compensées par la poussée des remblais.

Pour mieux solidariser les éléments d'un conduit, abir ou autre et faciliter la réalisation par des points, on peut éventuellement prévoir en plus des câbles de précontrainte formant cerclage, des câbles ou barres de précontraintes reliant entre eux des éléments longitudinaux adjacents dans le sens de la longueur les uns des autres. Ces câbles ou barres peuvent relier entre eux chacun au moins deux éléments consécutifs, par exemple, un élément peut être relié à l'élément qui le suit par un jeu de câbles ou barres, et à l'élément qui le précède par un jeu analogue, ce qui permet d'opérer la précontrainte de façon progressive à mesure de l'avancement de la pose. On peut prévoir aussi que chaque câble ou barre de précontrainte relie entre eux trois éléments consécutifs ou même plus.

## Revendications

1. a) Procédé d'obtention d'un conduit limité par une paroi cylindrique, non de révolution, reposant sur le sol par une base aplatie et susceptible d'être recouverte d'un remblai,
b) par assemblage sur le site d'éléments longitudinaux préparés à l'avance, correspondant chacun à une partie de la section transversale de la paroi, et prenant appui les uns sur les autres le long de joints longitudinaux (JL),
c) de façon à former des tronçons adjaçents constitués chacun , en section transversale, d'au moins deux éléments longitudinaux et comportant une partie inférieure (40) à fond plat, formant la base reposant sur le sol, et une partie supérieure formant une voûte reposant sur la base, caractérisé en ce que
d) on détermine, par un calcul préalable, le profil optimal de section du conduit et les contraintes appliquées, en tenant compte de tous les paramètres connus concernant le site d'installation, les conditions d'utilisation et les caractéristiques intrinsèques du conduit,
e) on détermine en fonction du résultat de ce calcul la forme des éléments longitudinaux (40, 42) qui sont des éléments sans ondulations , de telle façon que les joints longitudinaux (JL) entre éléments adjacents soient au voisinage de "noeuds de contrainte", c'est-à-dire de points où la valeur absolue des contraintes transversales à la paroi passe par un minimum,
f) puis on procède à un calcul des contraintes élément par élément et,
g) en fonction du résultat de ce calcul, on détermine la forme exacte de la courbure, la matière de chaque élément et son épaisseur, celle-ci variant le long du tracé de la section transversale dudit élément pour adapter cette épaisseur aux contraintes exercées, telles qu'elles résultent dudit calcul.

2. Procédé selon la revendication 1, caractérisé en ce que, dans le cas où les éléments de conduit (A, B) sont réalisés par moulage monobloc ou bien par profilage continu de section, notamment par filage, de matières telles que la fonte ductile. l'acier, le béton armé, etc., on utilise un moule ou outillage dont la section transversale est profilée de manière à reproduire sur la surface intérieure de l'élément de conduit les tronçons précités de profil optimal et également la variation transversale d'épaisseur.

3. Procédé selon l'une des revendications 1 à 2 caractérisé en ce qu'on utilise des éléments longitudinaux sans ondulation et procurant ensemble une surface intérieure continue.

4. Procédé selon l'une des revendications 1 à 3, caractérisé en ce que les joints de structure selon l'invention ne sont pas en disposition alternée, mais qu'au contraire les joints longitudinaux (JL) sont en prolongement les uns des autres de part et d'autre de chaque joint transversal (JT).

5. Procédé selon l'une des revendications 1 à 4, caractérisé en ce qu'on utilise pour les différents éléments longitudinaux (A, B) des éléments de matières différentes en prenant les précautions nécessaires pour éviter la corrosion par effet de couple électrochimique.

6. Procédé selon la revendication 5, caractérisé en ce que les éléments (40) de la partie inférieure de la section du conduit sont en ciment et les éléments (42) de la partie supérieure sont en métal.

7. Procédé selon l'une des revendications 1 à 6, caractérisé en ce qu'on procède à l'assemblage initial des éléments (4, 5) d'une facon permettant un déplacement relatif limité des éléments adjacents et en ce qu'on procède ensuite à un assemblage définitif des éléments entre eux.

8. Procédé selon la revendication 7, caractérisé en ce que l'assemblage initial des éléments entre eux est fait à l'aide de boulons (12) traversant au moins un des éléments par un trou élargi (9, 10).

9. Procédé selon l'une des revendications 1 à 8, caractérisé en ce que, pour réaliser la jonction longitudinale des éléments de conduit (A1, B1), on forme des parties en creux (25) ou en saillie (24) placées dans les zones des bords correspondants et pouvant coopérer par conjugaison de formes et/ou de forces pour la création des joints longitudinaux nécessaires.

10. Procédé selon l'une des revendications 1 à 9, caractérisé en ce que, pour réaliser un joint longitudinal entre deux éléments (A1, B1) réalisés en béton armé, on laisse dépasser des armatures (20, 21) lors du moulage des éléments, on met en place ces derniers dans les positions prévues sur le lieu d'installation du conduit. en laissant un intervalle dans lequel se recouvrent les parties extrèmes dépassantes des armatures respectives, puis, en utilisant des éléments de coffrage appropriés (26) on coule un mortier de scellement (23) dans l'intervalle existant afin de réaliser le joint longitudinal.

11. Procédé selon l'une des revendications 1 à 10, caractérisé en ce que, pour la création de joints longitudinaux (JL), on forme une nervure (73, 74) sur chacun des bords de deux éléments (A1, B1) à joindre, et on répartit le long des deux nervures (73, 74) ainsi formées des moyens de serrage (75).

12. Procédé selon la revendication 11, caractérisé en ce que lesdits moyens de serrage sont des étriers (75).

13. Procédé selon la revendication 12, caractérisé en ce que les étriers (75) sont fixés à l'aide de pièces (76, 77) rigides ou élastiques emmanchées entre la surface intérieure de l'étrier (75) et le flanc de la nervure correspondante (73, 74).

14. Procédé selon la revendication 12, caractérisé en ce que les étriers (75) sont fixés sur les nervures (73, 74) par déformation rigide des étriers eux-mêmes.

15. Procédé selon l'une des revendications précédentes, caractérisé par le fait qu'on laisse un intervalle entre les surfaces (15, 16) de délimitation du joint transversal entre deux éléments adjacents (A1, A'1) appartenant à deux tronçons successifs du conduit.

16. Procédé selon l'une des revendications précédentes, caractérisé en ce que, pour assurer l'étanchéité sous pression du conduit, on interpose entre les bords des joints longitudinaux (JL) et/ou transversaux (JT), des garnitures d'étanchéité (81, 83) d'une section profilée en correspondance auxdits bords.

17. Procédé selon la revendication 16, caractérisé par le fait que le serrage étanche des garnitures d'étanchéité est assuré au moyen d'étriers (75) prenant appui sur des nervures (73, 74), ménagées sur les bords en vis à vis de deux éléments (A1, B1) à joindre, ou bien à l'aide de colliers, cerclages ou autres moyens.

18. Procédé selon l'une des revendications précédentes, caractérisé en ce que, dans les cas où les éléments sont formés de matières soudables ou scellables, les joints longitudinaux (JL) sont réalisés par apport de la matière soudable ou scellable (23) correspondante.

19. Procédé selon l'une des revendications précédentes, caractérisé en ce que, dans les cas où les éléments sont formés de matières soudables ou scellables, les joints transversaux (JT) sont réalisés par apport de la matière soudable ou scellable (23) correspondante.

20. Procédé selon l'une des revendications précédentes, caractérisé en ce qu'on procède, après l'assemblage des éléments longitudinaux, à une précontrainte du conduit, dans le sens longitudinal et/ou dans le sens transversal, avant ou après la mise en service du conduit.

21. Procédé selon l'une des revendications précédentes, caractérisé en ce que, pour une étanchéité améliorée, on prévoit un revêtement (50) ou un chemisage ou chemisage étanche, solidaire ou non des éléments (A1, A2) de la structure.

22. Procédé selon la revendication 21, caractérisé en ce que le revêtement intérieur constitue une partie (50) de coffrage perdue pour les éléments de la structure.

23. Procédé selon la revendication 22 et dans lequel le revêtement intérieur est en une matière soudable ou collable, caractérisé en ce qu'au niveau des joints (JL, JT) entre éléments, on réalise l'étanchéité en soudant ou collant sur les parties du revêtement (50) des pièces plates (44) en matière compatible avec celle du revêtement (50).

24. Procédé selon la revendication 22 et dans lequel le revêtement intérieur est en une matière soudable ou collable, caractérisé en ce qu'on soude ou colle directement entre elles les parties de revêtement au niveau des joints (JL, JT).

25. Procédé selon l'une des revendications précédentes, caractérisé en ce que, pour l'assemblage des éléments de la structure, on prévoit dans un élément (A2) un trou fileté (45) à peu prés perpendiculaire au plan du joint, et en ce qu'on visse dans ce trou une tige filetée (49) insérée dans un trou (48) de l'élément (A1) qui fait vis à vis.

26. Procédé selon l'une des revendications précédentes, caractérisé en ce qu'on fixe par boulonnage, sous la base (40) de forme aplatie du conduit, des masses de lestage ou bien des éléments d'ancrage.

27. Procédé selon l'une des revendications précédentes, caractérisé en ce qu'on utilise. pour les changements directionnels du conduit, des éléments préfabriqués courbés ou en pans coupés, spécialement calculés et adaptés.

28. Procédé selon l'une des revendications précédentes, caractérisé en ce qu'on relie entre eux au moins deux éléments longitudinaux adjacents dans le sens de la longueur par des câbles ou barre de précontrainte.

29. Procédé selon la revendication 28, caractérisé en ce que chaque élément est relié à l'élément qui le suit par un jeu de câbles ou barres de précontrainte et à l'élément qui le précède par un autre jeu de câbles ou barres de précontrainte.

30. Procédé selon l'une des revendications précédentes, caractérisé par le fait que, pour faciliter la mise en place et la stabilisation du conduit, on place, sur les côtés de la face inférieure de ce dernier, des éléments stabilisateurs (41) ayant une face plane horizontale qui est à peu près au niveau du fond du conduit.

31. Procédé selon l'une des revendications précédentes, caractérisé par le fait que, chaque tronçon du conduit comprenant deux éléments de côté (A2) à orientation générale verticale, on place à la base desdits éléments de côté (A2) des éléments stabilisateurs (41) permettant auxdits éléments de côté (A2) de se tenir droits par eux-mêmes en reposant sur le sol.

32. Procédé de réalisation d'un conduit selon l'une des revendications précédentes, caractérisé par le fait que, pour la réalisation d'un tronçon du conduit, on place deux éléments de côté (A2) munis d'éléments stabilisateurs (41) leur permettant de se tenir droits par eux-mêmes en reposant sur le sol, puis l'on pose l'élément supérieur (A1) sur lesdits éléments de côté (A2).

33. Procédé de réalisation d'un conduit selon la revendication 32, caractérisé par le fait que l'on réalise la jonction entre les bords inférieurs des éléments de côté (A2) et le fond (A3) avant la pose de l'élément supérieur (A1) sur les éléments de côté (A2).

## Claims

1. a) Method for obtaining a conduit, limited by a cylindrical wall, not of revolution, laying on the ground by a flattened base and liable to be covered by an embankment,
b) by on-site assembly of longitudinal elements prepared in advance, each corresponding to part of the cross-section of the wall, and bearing on one another along longitudinal joints (JL),
c) in a manner such as to form adjacent portions each comprising, in cross section, at least two longitudinal elements and comprising a flat bottomed lower part (40) forming the base resting on the ground and an upper part forming an arch bearing on the base, characterised by the steps comprising :
d) determining by a previous calculation, the optimal cross-sectional profile of the conduit and the involved stresses, taking into account all the known parameters relating to the site of installation, the conditions of use and the inherent characteristics of the conduit,
e) determining as a function of the result of this calculation the shape of the longitudinal elements (40, 42) which are non-corrugated elements in a manner such that the longitudinal joints (JL) between adjacent elements are in the vicinity of "stress nodes" that is to say points where the absolute value of the stresses transverse to the wall passes through a minimum
f) then calculating the stresses element by element, and
g) as a function of the result of this calculation, determining the exact form of the curvature, the material of each element and the thickness thereof, said latter varying along the course of the cross-section of said element in order to adapt this thickness to the stresses exerted such as a result of said calculation.

2. Method according to Claim 1, characterized in that, in the event that the pipe elements (A, B) are produced by monoblock moulding or by continuous sectional shaping, particularly extrusion, of materials such as ductile cast iron, steel, reinforced concrete, etc., a mould or die is used whose cross-section is profiled in a manner such as to reproduce on the inner surface of the pipe element the abovementioned sections of optimum profile and likewise the transverse variation in thickness.

3. Method according to one of Claims 1 to 2, characterized in that non-corrugated longitudinal elements are used, combining to produce a continuous inner surface.

4. Method according to one of Claims 1 to 3, characterized in that the structural joints according to the invention are not in alternating arrangement but, on the contrary, the longitudinal joints (JL) are each in the extension of the others on either side of each transverse joint (JT).

5. Method according to one of Claims 1 to 4, characterized in that elements of different materials are used for the various longitudinal elements (A, B), the necessary precautions being taken to avoid corrosion resulting from electrochemical pairing.

6. Method according to Claim 5, characterized in that the elements (40) of the lower part of the section of the pipe are made of cement and the elements (42) of the upper part are made of metal.

7. Method according to one of Claims 1 to 6, characterized in that the elements (4, 5) are initially assembled in a manner permitting limited relative displacement of the adjacent elements and in that these elements are then definitively and mutually assembled.

8. Method according to Claim 7, characterized in that the initial mutual assembly of the elements is carried out by means of bolts (12) passing through a widened hole (9, 10) in at least one of the elements.

9. Method according to one of Claims 1 to 8, characterized in that, in order to produce the longitudinal junction of the pipe elements (A1, B1), hollow (25) or projecting (24) parts are formed which are situated in the corresponding edge zones and can interact by conjugation of shapes and/or of forces to create the necessary longitudinal joints.

10. Method according to one of Claims 1 to 9, characterized in that, in order to produce a longitudinal joint between two elements (A1, B1) produced from reinforced concrete, reinforcements (20, 21) are allowed to project during casting of the elements, the latter are set in their intended positions at the place where the pipe is to be laid, leaving a gap in which the projecting end parts of the respective reinforcements overlap, then, using appropriate coffering elements (26), a sealing mortar (23) is poured into the existing gap in order to produce a longitudinal joint.

11. Method according to one of Claims 1 to 10, characterized in that, in order to create longitudinal joints (JL), a rib (73, 74) `is formed on each of the edges of the two elements (A1, B1) to be joined, and gripping means (75) are distributed along the two ribs (73, 74) thus formed.

12. Method according to Claim 11, characterized in that the said gripping means are clamps (75).

13. Method according to Claim 12, characterized in that the clamps (75) are fixed by means of rigid or elastic components (76, 77) fitted between the inner surface of the clamp (75) and the flank of the corresponding rib (73, 74).

14. Method according to Claim 13, characterized in that the clamps (75) are fixed on the ribs (73, 74) by rigid deformation of the clamps themselves.

15. Method according to one of the preceding claims, characterized in that the gap is left between the surfaces (15, 16) delimiting the transverse joint between two adjacent elements (A1, A'1) belonging to two successive sections of the pipe.

16. Method according to one of the preceding claims, characterized in that, in order to ensure the leaktightness of the pipe under pressure, gaskets (81, 83) having a section profiled to correspond to the edges of the longitudinal joints (JL) and/or transverse joints (JT) are interposed between the said edges.

17. Method according to Claim 16, characterized in that the leaktight gripping of the gaskets is ensured by means of clamps (75) bearing on grips (73, 74) provided on the facing edges of two elements (A1, B1) to be joined, or alternatively by means of collars, hoops or other means.

18. Method according to one of the preceding claims, characterized in that, in cases where the elements are formed from weldable or sealable materials, the longitudinal joints (JL) are produced by applying the corresponding weldable or sealable material (23).

19. Method according to one of the preceding claims, characterized in that, in cases where the elements are formed from weldable or sealable materials, the transverse joints (JT) are produced by applying the corresponding weldable or sealable material (23).

20. Method according to one of the preceding claims, characterized in that, after assembly of the longitudinal elements, the pipe is prestressed in the longitudinal direction and/or in the transverse direction, before or after the pipe is taken into service.

21. Method according to one of the preceding claims, characterized in that, for improved leaktightness, a coating (50) or a sheathing or leaktight sheathing is provided which may or may not be fixed to the elements (A1, A2) of the structure.

22. Method according to Claim 21, characterized in that the inner coating represents a disposable coffering part (50) for the structural elements 40.

23. Method according to Claim 22 in which the inner coating is of a weldable or bondable material, characterized in that at the level of the joints (JL, JT) between elements, leaktightness is produced by welding or bonding to the coating parts (50) flat pieces (44) of a material compatible with that of the coating (50).

24. Method according to Claim 22, in which the inner coating is of a weldable or bondable material, characterized in that the coating parts at the level of the joints (JL, JT) are mutually welded or bonded directly.

25. Method according to one of the preceding claims, characterized in that, for the assembly of the elements of the structure, a threaded hole (45) virtually perpendicular to the plane of the joint is provided in one element (A2), and in that a threaded rod (49) inserted into a hole (48) in the facing element (A1) is screwed into this hole.

26. Method according to one of the preceding claims, characterized in that ballasting masses or anchoring elements are fixed by bolting onto the flattened base (40) of the pipe.

27. Method according to one of the preceding claims, characterized in that especially calculated and adapted curved or bevelled prefabricated elements are used for the direction changes of the pipe.

28. Method according to one of the preceding claims, characterized in that at least two adjacent longitudinal elements are mutually joined in the lengthwise direction by cables or a prestress rod.

29. Method according to Claim 28, characterized in that each member is connected to the member which follows by a set of cables or prestress bars, and to the element which precedes by another set of cables or prestress bars.

30. Method according to one of the preceding claims, characterized in that, to facilitate the positioning and stabilisation of the pipe, stabilising elements (41) which have a horizontal planar face approximately at the level of the bottom of the pipe are positioned on the sides of the bottom face of the latter.

31. Method according to one of the preceding claims, characterized in that, each section of the pipe comprising two side elements (A2) of a general vertical orientation, stabilising elements (41) are placed at the base of the said side elements (A2), making it possible for these said side elements (A2) to stand upright on their own, resting on the ground.

32. Method for producing a pipe according to one of the preceding claims, characterized in that, in order to produce a section of the pipe, two side elements (A2) fitted with stabilising elements (41) enabling them to stand upright by themselves, resting on the ground are positioned and then the upper element (A1) is placed on the said side elements (A2).

33. Method of producing a pipe according to Claim 32, characterized in that the junction between the lower edges of the side elements (A2) and the bottom (A3) is effected before the upper element (A1) is placed on the side elements (A2).

## Patentansprüche

1. a) Verfahren zur Herstellung einer durch eine nicht drehsymmetrische zylindrische Wand begrenzte Rohrleitung, die über eine abgeflachte Basis auf dem Boden aufliegt und mittels Aufschüttung abgedeckt werden kann,
b) durch Zusammenbau vor Ort vorgefertigter länglicher Elemente, die jeweils einer Partie des Wandquerschnittes entsprechen und sich entlang Längsverbindungen (JL) die einen auf den anderen abstützen,
c) sodass aneinandergrenzende Abschnitte gebildet werden, wobei jeder Abschnitt im Querschnitt aus mindestens zwei Längselemente besteht und ein unteres, flaches Bodenelement (40) aufweist, das die auf dem Erdboden ruhende Basis bildet, sowie ein oberes als Gewölbe ausgebildetes auf der Basis aufliegendes Teil, dadurch gekennzeichnet, dass
d) man durch vorherige Berechnung den optimalen Querschnittsprofil der Rohrleitung und die beaufschlagten Belastungen bestimmt unter Berücksichtigung sämtlicher den Einbauort, die Einsatzbedingungen und die spezifischen Merkmale der Rohrleitung betreffenden bekannten Parameter,
e) man entsprechend den Rechnungsergebnissen die Form der nichtwelligen Längselemente (40, 42) derart bestimmt, dass sich die Längsverbindungen (JL) zwischen angrenzenden Elemente in der Nähe von "Spannungsknotenpunkten" befinden, d.h. von Punkten, bei denen der absolute Wert der quer zur Wand verlaufenden Spannungen ein Mindestwert durchläuft,
f) man dann eine Berechnung der Spannungen eines jeden Elementes vornimmt, und
g) dem Rechnungsergebnis entsprechend die genaue Form der Krümmung, der Werkstoff eines jeden Elementes und dessen Dicke bestimmt wird, wobei sich diese entlang des Querschnittprofils des Elementes verändert zur Anpassung dieser Dicke an die gemäss den sich aus den Berechnungen ergebenden ausgeübten Spannungen.

2. Verfahren nach Anspruch 1, dadurch gekennzeichnet, daß man in dem Fall, wo die Rohrleitungselemente (A, B) durch einstückiges Gießen oder durch fortlaufende Querschnittsprofilierung, insbesondere durch Strangpressen, aus einem Material wie formbares Gußmaterial, Stahl, armierter Beton usw. hergestellt sind, eine Form oder ein Werkzeug benutzt, deren bzw. dessen Querschnitt derart profiliert ist, um auf der Innenseite des Rohrleitungselementes die vorgenannten Abschnitte mit optimalem Profil und gleicher Dickenqueränderung herzustellen.

3. Verfahren nach einem der Ansprüche 1 bis 2, dadurch gekennzeichnet, daß man längliche Elemente ohne Welligkeit verwendet und miteinander eine fortlaufende Innenoberflache schafft.

4. Verfahren nach einem der Ansprüche 1 bis 3, dadurch gekennzeichnet, daß die Aufbauverbindungen gemäß der Erfindung nicht in wechselnder Anordnung vorgesehen sind, sondern im Gegenteil sind die Längsverbindungen (JL) zueinander in ihrer Verlängerung beiderseits jeder Querverbindung vorgesehen.

5. Verfahren nach einem der Ansprüche 1 bis 4, dadurch gekennzeichnet. daß man für die verschiedenen länglichen Elemente (A, B) Elemente aus verschiedenen Werkstoffen verwendet und die notwendigen Schutzmaßnahmen trifft, um Korrosion durch elektrochemischen Paarungseffekt zu verhüten.

6. Verfahren nach Anspruch 5, dadurch gekennzeichnet, daß die Elemente (40) der unteren Partie des Rohrleitungsquerschnittes aus Zement bestehen und die Elemente (42) der oberen Partie aus Metall bestehen.

7. Verfahren nach einem der Ansprüche 1 bis 6, dadurch gekennzeichnet, daß man den anfänglichen Zusammenbau der Elemente (4, 5) nach einer Art durchführt, die eine begrenzte relative Verschiebung benachbarter Elemente erlaubt, und daß man dann einen endgültigen Zusammenbau der Elemente miteinander durchführt.

8. Verfahren nach Anspruch 7, dadurch gekennzeichnet, daß der anfängliche Zusammenbau der Elemente miteinander mit Hilfe von Gewindebolzen (12) durchgeführt wird, die wenigstens eines der Elemente durch ein erweitertes Loch (9, 10) durchqueren.

9. Verfahren nach einem der Ansprüche 1 bis 8, dadurch gekennzeichnet, daß man zur Verwirklichung der Längsverbindungsstelle der Rohrleitungselemente (A1, B1) Vertiefungsbereiche (25) oder Vorsprungsbereiche (24) formt, die in den entsprechenden Randzonen plaziert werden und durch formschlüssige und/oder kraftschlüssige Verbindung zur Schaffung der Längsverbindungen beitragen können.

10. Verfahren nach einem der Ansprüche 1 bis 9, dadurch gekennzeichnet, daß man zur Verwirklichung der Längsverbindung zwischen zwei aus armiertem Beton hergestellten Elementen (A1, B1) Bewehrungen (20, 21) von der Gußform der Elemente vorstehen läßt, daß man diese letzteren in die an dem Installationsort der Rohrleitung vorgesehenen Stellungen bringt und einen Zwischenraum beläßt, in welchen sich die äußeren vorstehenden Teile der entsprechenden Bewehrungen hineinerstrecken. und daß man dann unter Verwendung von geeigneten Abdeckungselementen (26) Verschließmörtel (23) in den bestehenden Zwischenraum eingießt. um die Längsverbindung herzustellen.

11. Verfahren nach einem der Ansprüche 1 bis 10, dadurch gekennzeichnet, daß man zur Schaffung der Längsverbindungen (JL) eine Rippe (73, 74) an jedem Rand der beiden zu verbindenden Elemente (A1, B1) ausbildet und daß man entlang der beiden so gebildeten Rippen (73, 74) Spannmittel (75) verteilt anbringt.

12. Verfahren nach Anspruch 11, dadurch gekennzeichnet, daß die genannten Spannmittel aus Klammern (75) bestehen.

13. Verfahren nach Anspruch 12, dadurch gekennzeichnet, daß die Klammern (75) mit Hilfe von starren oder elastischen, zwischen der Innenfläche der Klammer (75) und der Flanke der entsprechenden Rippe (73, 74) eingepreßten Stücken (76) befestigt werden.

14. Verfahren nach Anspruch 13, dadurch gekennzeichnet, daß die Klammern (75) durch starre Verformung der Klammern selbst an den Rippen (73, 74) befestigt werden.

15. Verfahren nach einem der vorangehenden Ansprüche, dadurch gekennzeichnet, daß man einen Zwischenraum zwischen den Begrenzungsflächen (15, 16) der Querverbindung zwischen zwei benachbarten, zu zwei aufeinanderfolgenden Abschnitten der Rohrleitung gehörenden Elementen (A1, A'1) beläßt.

16. Verfahren nach einem der vorangehenden Ansprüche, dadurch gekennzeichnet, daß man zur Sicherung der Druckdichtigkeit der Rohrleitung zwischen die Ränder der Längs-(JL) und/oder der Querverbindungen (JT) entsprechend der genannten Ränder querschnittsprofilierte Dichtungseinlagen (81, 83) einlegt.

17. Verfahren nach Anspruch 16, dadurch gekennzeichnet, daß das dichte Spannen der Dichtungseinlagen mittels sich an den Rippen (73, 74) abstützender Klammern (75) gesichert wird, die an den sich gegenüberliegenden Rändern von zwei zu verbindenden Elementen (A1, B1) anliegen, oder mit Hilfe von Ringen, Bandagen oder anderen Mitteln gesichert wird.

18. Verfahren nach einem der vorangehenden Ansprüche, dadurch gekennzeichnet. daß in dem Fall, wo die Elemente aus schweißbarem oder betonierbarem Material gebildet sind, die Längsverbindungen (JL) durch Zuführen von entsprechendem schweißbarem oder betonierbarem Material (23) verwirklicht werden.

19. Verfahren nach einem der vorangehenden Ansprüche, dadurch gekennzeichnet, daß in dem Fall, wo die Elemente aus schweißbarem oder betonierbarem Material gebildet sind, die Querverbindungen (JT) durch Zuführen von entsprechendem schweißbarem oder betonierbarem Material (23) verwirklicht werden.

20. Verfahren nach einem der vorangehenden Ansprüche. dadurch gekennzeichnet, daß man nach dem Zusammenbau der länglichen Elemente und vor oder nach der Inbetriebnahme der Rohrleitung in Längsrichtung und/oder Querrichtung eine Vorspannung in der Rohrleitung durchführt.

21. Verfahren nach einem der vorangehenden Ansprüche, dadurch gekennzeichnet, daß man für eine verbesserte Dichtigkeit eine Beschichtung (50) oder eine Auskleidung oder eine dichte Auskleidung, fest oder nicht fest an den Elementen (A1, A2) des Aufbaus, vorsieht.

22. Verfahren nach Anspruch 21, dadurch gekennzeichnet, daß die innere Beschichtung ein verlorenes Schalungsteil (50) für die Elemente des Aufbaus bildet.

23. Verfahren nach Anspruch 22, nach welchem die innere Beschichtung aus einem schweißbaren oder klebbaren Material besteht, dadurch gekennzeichnet, daß man die Dichtigkeit auf dem Niveau der Verbindungen (JL, JT) zwischen den Elementen durch Aufschweißen oder Aufkleben von flachen Stücken (44) auf Bereiche der Beschichtung (50) aus einem Material verwirklicht, das mit demjenigen der Beschichtung (50) verträglich ist.

24. Verfahren nach Anspruch 22, bei dem die innere Beschichtung aus einem schweißbaren oder klebbaren Material besteht, dadurch gekennzeichnet, daß man die auf dem Niveau der Verbindungen (JL, JT) liegenden Beschichtungspartien direkt miteinander verschweißt oder verklebt.

25. Verfahren nach einem der vorangehenden Ansprüche, dadurch gekennzeichnet, daß man zum Zusammenbau der Elemente des Aufbaus in einem Element (A2) ein Gewindeloch (45) vorsieht, das annähernd senkrecht zur Verbindungsebene verläuft, und daß man in dieses Loch einen Gewindebolzen (49) einschraubt, der in ein Loch (48) des gegenüberliegenden Elementes (A1) eingesetzt wird.

26. Verfahren nach einem der vorangehenden Ansprüche, dadurch gekennzeichnet, daß man zur Verankerung unterhalb der abgeflachten Basis (40) der Rohrleitung Beschwerungsmassen oder auch Verankerungselemente befestigt.

27. Verfahren nach einem der vorangehenden Ansprüche, dadurch gekennzeichnet, daß man für die Richtungsänderung der Rohrleitung gekrümmte oder gehrungsmäßig ausgebildete, speziell berechnete und angepaßte, vorgefertigte Elemente verwendet.

28. Verfahren nach einem der vorangehenden Ansprüche, dadurch gekennzeichnet, daß man zwischen wenigstens zwei aneinandergrenzenden länglichen Elementen in Längsrichtung vorgespannte Drahtseile oder Stäbe einbindet.

29. Verfahren nach Anspruch 28, dadurch gekennzeichnet, daß jedes Element mit einem ihm folgenden, durch einen Satz vorgespannter Seile oder Stäbe und mit einem ihm vorangehenden Element durch einen weiteren Satz vorgespannter Seile oder Stäbe verbunden ist.

30. Verfahren nach einem der vorangehenden Ansprüche, dadurch gekennzeichnet, daß man zur Erleichterung des Instellungbringens und zur Stabilisierung der Rohrleitung an den Rändern der Unterseite der letzteren Stabilisierungselemente (41) plaziert, die eine horizontale, ebene Fläche aufweisen, die annähernd auf dem Niveau des Bodens der Rohrleitung liegt.

31. Verfahren nach einem der vorangehenden Ansprüche, dadurch gekennzeichnet, daß man an jedem Abschnitt der Rohrleitung, der zwei Seitenelemente (A2) mit im allgemeinen vertikaler Ausrichtung umfaßt, an der Basis der genannten Seitenelemente (A2) Stabilisierungselemente (41) plaziert, die den genannten Seitenelementen (A2) erlauben, sich selbst auf dem Erdboden ruhend aufrecht zu halten.

32. Verfahren zur Verwirklichung einer Rohrleitung nach einem der vorangehenden Anspruche, dadurch gekennzeichnet, daß man zur Verwirklichung eines Abschnittes der Rohrleitung zwei Seitenelemente (A2) aufstellt, die mit Stabilisierungselementen (41) ausgerüstet sind, die den Seitenelementen erlauben, sich selbst auf dem Erdboden aufrecht zu halten, und daß man dann das obere Element (A1) auf die genannten Seitenelemente (A2) aufsetzt.

33. Verfahren zur Verwirklichung einer Rohrleitung nach Anspruch 32, dadurch gekennzeichnet, daß man die Verbindung zwischen den unteren Rändern der Seitenelemente (A2) und dem Bodenelement (A3) vor dem Aufbringen des oberen Elementes (A1) auf die Seitenelemente (A2) durchführt.
